# EUROPÄISCHE PATENTSCHRIFT

(11) **EP 2 069 263 B1**
(45) Veröffentlichungstag und Bekanntmachung des Hinweises auf die Patenterteilung: **21.03.2018**
(21) Anmeldenummer: 07820665.3
(22) Anmeldetag: 27.09.2007
(51) Int. Cl.: C04B 35/628, C04B 35/634, B22F 1/00, B22F 1/02, B82Y 30/00, C09C 1/40, C09C 3/08, C09C 1/34, C23C 24/04

(54) **VERWENDUNG EINES PULVERS IN EINEM KALTGASSPRITZVERFAHREN**
USE OF A POWDER IN A COLD GAS SPRAYING METHOD
UTILISATION D'UN POUDRE DANS UN PROCÉDÉ DE PROJECTION DYNAMIQUE PAR GAZ FROID

(30) Priorität: 28.09.2006 DE 102006047103
(43) Veröffentlichungstag der Anmeldung: 17.06.2009
(73) Patentinhaber: Siemens Aktiengesellschaft, 80333 München (DE)
(72) Erfinder: JABADO, Rene, 14199 Berlin (DE); JENSEN, Jens, Dahl, 14050 Berlin (DE); KRÜGER, Ursus, 14089 Berlin (DE); KÖRTVELYESSY, Daniel, 13469 Berlin (DE); LÜTHEN, Volkmar, 12157 Berlin (DE); REICHE, Ralph, 13465 Berlin (DE); RINDLER, Michael, 15566 Schöneiche (DE); ULLRICH, Raymond, 14621 Schönwalde (DE)
(86) Internationale Anmeldenummer: PCT/EP2007/060277
(87) Internationale Veröffentlichungsnummer: WO 2008/037775

(56) Entgegenhaltungen:
- EP-A- 1 164 108
- WO-A-2006/020294
- US-A1- 2006 090 593
- DATABASE WPI Week 200623 Derwent Publications Ltd., London, GB; AN 2006-215402 XP002477354 & JP 2006 063160 A (NBC KOGYO KK) 9. März 2006 (2006-03-09)
- CHEN TSUNG-YUAN ET AL: "Preparation of novel core-shell nanocomposite particles by controlled polymer bridging" J AM CERAM SOC; JOURNAL OF THE AMERICAN CERAMIC SOCIETY JAN 1998 AMERICAN CERAMIC SOC, WESTERVILLE, OH, USA, Bd. 81, Nr. 1, Januar 1998 (1998-01), Seiten 140-144, XP002477353
- BOGUE ROBERT: "Nanoparticle-based assay set to revolutionise clinical diagnostics" SENS REV; SENSOR REVIEW 2005, Bd. 25, Nr. 4, 2005, Seiten 249-251, XP008090541

## Beschreibung

### Hintergrund der Erfindung

Die Erfindung betrifft die Verwendung eines Pulvers in einem Kaltgasspritzverfahren.

Das Deponieren von Partikeln mittels Kaltgasspritzverfahren bspw. auf Turbinenschaufeln funktioniert bisher nur mit Partikeln, die größer als ca. 5µm sind. Ursache hierfür sind die Impulsübertragungseigenschaften der Partikel auf die Oberfläche. Aus verschiedenen Gründen ist man jedoch daran interessiert, Nanopartikel mittels Kaltgasspritzverfahren zu verspritzen.

Um dies zu ermöglichen, wurde vorgeschlagen, Nanopartikel mit Hüllen zu versehen, um ihre Größe und Masse im Hinblick auf geeignete Impulsübertragungseigenschaften zu erhöhen. Partikel mit einem Nanoteilchen als Kern, welche von einer Hülle oder Kapsel umgeben sind, sind bspw. aus DE 101 31 173 A1 bekannt, auch wenn die darin beschriebenen Kern-Hülle-Teilchen Abmessungen unter 1µm aufweisen. Auch in der WO 2006/020294 A2 sind Kern-Hülle-Teilchen beschrieben.

Gemäß der US 2006/0090593 A1 ist bechrieben, dass Nanopartikel mittels Kaltgasspritzen dadurch abgeschieden werden können, dass diese aufgrund von Adhäsionskräften auf größeren Mikropartikeln aufgebracht werden. Dadurch erhalten die so gebildeten Agglomerate eine genügende Masse um durch das Kaltgasspritzen abgeschieden zu werden. Als Ergebnis lassen sich metallische Schichten aus den Nanopartikeln erzeugen.

Die Trägerpartikel sind aus einem nicht duktilen Werkstoff und werden daher nicht mit abgeschieden.

Die Nanopartikel können, wie bspw. in EP 1 548 134 A2 beschrieben, durch wiederholtes Brechen von Mikropartikeln in einem Mahlverfahren hergestellt werden. Aus US 2005/0158723 A1 sind irreversible kolloidale, also fein verteilte, Ketten mit Erkennungsstellen bekannt. Ziel ist es dabei, ein neuartiges Werkzeug für Diagnose und/oder Vorbereitung einer Identifizierungsanalyse oder Untersuchung von Arten in einer flüssigen Probe zur Verfügung zu stellen. Es wird ein Zusammenbau von kolloidalen Partikeln in Form von einer oder mehreren Ketten dargestellt, die dadurch gekennzeichnet sind, dass die Ketten irreversibel aufgebaut sind und mindestens eine Erkennungsstelle aufweisen für eine Art, die anders ist als die Liganden, die mit der linearen Anordnung der Partikel zu tun haben. Die kolloidalen Ketten können entsprechend der Erfindung relativ steif, halbsteif oder beweglich aufgebaut sein.

Gemäß der EP 1 164 108 A1 ist es bekannt, dass hohle Kohlenstoffpartikel verwendet werden können, die ähnlich wie Karbonanotubes hohl ausgeführt sind und mit anderen Materialien einen Komposit bilden können.

Gemäß Tsung-Yuan Chen et al. ist es gemäß dem Journal of the American Ceramic Society, Band 82, Seiten 140 - 144 aus dem Jahr 1998 bekannt, dass keramische Nanopartikel mittels Polymerbrücken an die Oberfläche von keramischen Mikropartikeln gebunden werden können.

### Zugrunde liegende Aufgabe

Die Aufgabe wird durch ein Pulver mit den Merkmalen des Anspruchs 1 gelöst. Die zweite Aufgabe wird durch ein Verfahren zur Herstellung eines Pulvers nach Anspruch 8 gelöst. Die abhängigen Ansprüche enthalten vorteilhafte Weiterbildungen der Erfindung.

Erfindungsgemäß besteht die Lösung der Aufgabe aus der Verwendung eines Pulvers für ein Kaltgasspritzverfahren mit Mikropartikeln, Nanopartikeln und Kopplungsmolekülen, in dem an ein Mikropartikel Nanopartikel über wenigstens ein Kopplungsmolekül gebunden sind. Insbesondere kann eine Vielzahl von Nanopartikeln an das Mikropartikel gebunden sein.

Der Erfindung liegt als Aufgabe zugrunde, ein Pulver für ein Kaltgasspritzverfahren zur Verfügung zu stellen, welches ein Kaltgasspritzen von Partikeln, die kleiner als ca. 5µm sind, ermöglicht.

### Erfindungsgemäße Lösung

Die Aufgabe wird durch ein Pulver mit den Merkmalen des Anspruchs 1 gelöst. Die abhängigen Ansprüche enthalten vorteilhafte Weiterbildungen der Erfindung.

Erfindungsgemäß besteht die Lösung der Aufgabe aus der Verwendung eines Pulvers für ein Kaltgasspritzverfahren mit Mikropartikeln, Nanopartikeln und Kopplungsmolekülen, in dem an ein Mikropartikel Nanopartikel über wenigstens ein Kopplungsmolekül gebunden sind. Insbesondere kann eine Vielzahl von Nanopartikeln an das Mikropartikel gebunden sein.

Es werden nicht Nanopartikel mit einer Hülle aus Mikropartikeln umgeben wie bisher, sondern an ein Mikropartikel als Träger werden über spezifisch entwickelte, organische Kopplungsmoleküle Nanopartikel angehängt, um in einem Kaltgasspritzverfahren verwendet zu werden.

Das Pulverteilchen aus Mikropartikel, Kopplungsmolekülen und Nanopartikeln weist die nötige Masse und Größe auf, um in einem Kaltgasspritzprozess verspritzt zu werden. Da die Kopplungsmoleküle organisch sind, werden sie beim Auftreffen auf das zu beschichtende Substrat zersetzt.

Bei einer vorteilhaften Weiterbildung der Erfindung sind die Mikropartikel jeweils von einer Hülle umgeben, die von Nanopartikeln gebildet wird, die über eine Anzahl von Kopplungsmolekülen an das Mikropartikel gekoppelt sind.

Die Kopplungsmoleküle sind insbesondere polare Moleküle, d.h. Moleküle mit verschiedenen funktionellen Gruppen an einander gegenüberliegenden Enden. Die eine funktionelle Gruppe des Kopplungsmoleküls bindet an das Mikropartikel, beispielsweise ein Keramikpartikel, während die funktionelle Gruppe am anderen Ende des Kopplungsmoleküls an das Nanopartikel bindet. Die Kopplungsmoleküle können bspw. Polymere (organische Moleküle) sein, z.B. lineare Polymere (Ketten) oder Dendrimere, also baumartig verästelte Polymere, durch die jeweils mehrere Nanopartikel an ein Mikropartikel gekoppelt werden können. Dadurch ist eine große Anzahl Nanopartikel pro Mikropartikel möglich.

Die Mikropartikel können bspw. Keramikpartikel sein, so dass zum Beispiel Wärmedämmbeschichtungen (TBC = thermal barrier coating), insbesondere für Turbinenbauteile mittels Kaltgasspritzens hergestellt werden können.

Die Mikropartikel können auch MCrAlX-Partikel oder Komponenten davon sein. Dadurch ist das Herstellen von Anbindungsschichten auf Turbinenbauteilen in oxidativen oder korrosiven Umgebungen möglich. In MCrAlX steht M für mindestens 1 Element der Gruppe Eisen (Fe), Kobalt (Co) oder Nickel (Ni), X für ein Aktivelement, etwa Yttrium (Y) und/oder Silizium (Si) und/oder zumindest ein Element der seltenen Erden, bzw. Hafnium (Hf). Solche Legierungen sind beispielsweise aus EP 0 486 489 B1, EP 0 786 017 B1, EP 0 412 397 B1 oder EP 1 306 454 A1 bekannt, die bezüglich der möglichen chemischen Zusammensetzung der MCrAlX-Partikel Teil dieser Offenbarung sein sollen. Die Nanopartikel können hierbei eine Komponente der MCrAlX sein oder Zusätze, die bestimmte Aufgaben erfüllen sollen.

Wegen der geringen Größe der Nanopartikel überwiegen durch die große Oberfläche im Verhältnis zum Volumen die Oberflächeneigenschaften, während bei Mikropartikel, die größer sind und dadurch ein relativ großes Volumen im Verhältnis zur Oberfläche aufweisen, die Volumeneigenschaften überwiegen. Dies wirkt sich zum Beispiel auf die Leitfähigkeit oder die chemische Reaktivität der Teilchen aus.

Außerdem wird ein Verfahren zum Herstellen eines Pulvers vorgestellt, in dem die Mikropartikel in eine erste Lösung getaucht werden, die die Kopplungsmoleküle enthält, und danach in eine zweite Lösung getaucht werden, die die Nanopartikel enthält. Dies ist ein einfaches Verfahren zur Herstellung eines Pulvers für die Verwendung gemäss Anspruch 1.

### <Kurzbeschreibung der Zeichnungen

Weitere Merkmale, Eigenschaften und Vorteile der Erfindung ergeben sich aus der nachfolgenden Beschreibung von Ausführungsbeispielen unter Bezugnahme auf die beiliegende Figuren. Es zeigen:
- Fig. 1: eine schematische Darstellung eines Pulverteilchens.
- Fig. 2: ein Verfahren zur Herstellung eines Pulverteilchens.

### Detaillierte Beschreibung des Ausführungsbeispiels

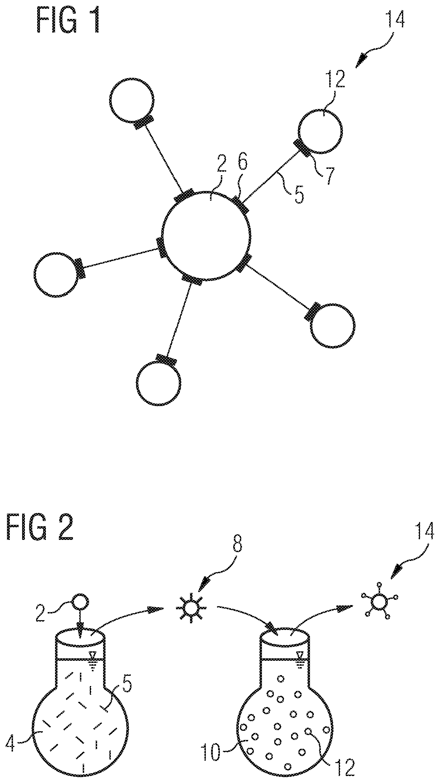

Fig. 1 stellt einen Pulverpartikel 14 dar, der aus einem Mikropartikel 2, Kopplungsmolekülen 5 und Nanopartikeln 12 besteht.

Der Mikropartikel 2 ist größer als 5 µm, und kann bspw. aus MCrAlX oder einer MCrAlX-Komponente, bspw. Co oder Ni, bestehen. Der Mikropartikel 2 kann aber auch aus anderen Materialien bestehen, bspw. aus Keramiken bzw. Mischoxiden.

Die Kopplungsmoleküle 5 können polare Moleküle, insbesondere Polymere, sein. Polare Moleküle sind Moleküle mit verschiedenen funktionellen Gruppen 6 und 7 an den beiden einander gegenüberliegenden Enden. Sie können als lineare Polymere (Ketten), wie in Fig. 1 dargestellt, oder als Dendrimere, also baumartig verästelte Polymere, ausgebildet sein. Dendrimere besitzen auf Grund ihrer Verästelung eine Vielzahl von Enden, die funktionelle Gruppen tragen können. Vorteilhafterweise tragen sie am "Stamm-Ende" der baumartigen Struktur eine funktionelle Gruppe 6, die an das Mikropartikel bindet und an den übrigen Enden funktionelle Gruppen 7, die an die Nanopartikel binden. Die Dendrimere haben außerdem die Eigenschaft, dass sie sich im Wesentlichen vertikal zur Oberfläche eines sphärischen Mikropartikels 2 orientieren, so dass ihre Nanopartikel 12 bindenden, funktionellen Gruppen 7 nach außen zeigen. Da die erste funktionelle Gruppe 6 der Kopplungsmoleküle 5 an den Mikropartikel 2 angepasst und die zweite funktionelle Gruppe 7 an die Nanopartikel 12 angepasst ist, können so Hüllen mit einer Vielzahl von Nanopartikeln 12 um die Mikropartikel 2 herum gebildet werden.

Die Nanopartikel 12 sind kleiner als 1 µm. Die Größen der Mikro- und Nanopartikel sind so gewählt, dass das aus Mikropartikel 2, Nanopartikeln 12 und Kopplungsmolekülen 5 gebildete Pulverteilchen 14 mindestens 5 µm groß ist, damit es in einem Kaltgasspritzverfahren verspritzt werden kann. Wenn der Mikropartikel 2 bspw. aus Nickel oder Kobalt besteht, können die Nanopartikel 12 etwa aus einem der Elemente Aluminium (Al), X, also einem Aktivelement, etwa Yttrium (Y) und/oder Silizium (Si) und/oder zumindest einem Element der seltenen Erden, bzw. Hafnium (Hf) oder aus Chrom (Cr) bestehen. Sie können mechanisch, z.B. durch Mahlen, hergestellt werden. Zusammen mit dem Mikropartikel 2 können die Nanopartikel 12 dann eine MCrAlX-Zusammensetzung bilden. Wenn als Mikropartikel 2 bereits eine MCrAlX-Zusammensetzung Verwendung findet, können die Nanopartikel 12 Zugabe zur MCrAlX-Zusammensetzung sein. Gleiches gilt, wenn die Mikropartikel bspw. aus Keramik bestehen.

In Fig. 2 erfolgt das Herstellen von Pulverpartikeln 14 (siehe Fig. 1) durch ein sog. layer-by-layer-Verfahren (LBL).

Mikropartikel 2 werden in eine erste Lösung 4 getaucht, die Kopplungsmoleküle 5 enthält. Die ersten funktionellen Gruppen 6 der Kopplungsmoleküle 5 lagern sich an die Mikropartikel 2 an, so dass Komplexe 8 entstehen.

Die Komplexe 8 werden in eine zweite Lösung 10 getaucht, die Nanopartikel 12 enthält. An den nach außen zeigenden zweiten funktionellen Gruppen 7 der Kopplungsmoleküle 5 (Ketten oder Dendrimere) können dann lokal Nanopartikel 12 gebunden werden, so dass Pulverteilchen 14 aus zentralen Mikropartikeln 2, an diesen gebundenen Kopplungsmolekülen 5 und an diese angelagerten Nanopartikeln 12 entstehen.

## Patentansprüche

1. Verwendung eines Pulvers, welches Mikropartikel (2) mit einer Partikelgröße von mehr als 5 µm, Nanopartikel (12) mit einer Partikelgröße von weniger als 1 µm und Kopplungsmoleküle (5) umfasst und in dem an ein Mikropartikel (2) Nanopartikel (12) über wenigstens ein Kopplungsmolekül (5) gebunden sind, für Kaltgasspritzverfahren.

2. Verwendung nach Anspruch 1, wobei die Mikropartikel (2) jeweils von einer Hülle umgeben sind, die von einer Anzahl über Kopplungsmoleküle (5) an das Mikropartikel (2) gekoppelten Nanopartikeln (12) gebildet ist.

3. Verwendung nach Anspruch 1 oder 2, wobei die Mikropartikel (2) Keramikpartikel sind.

4. Verwendung nach einem der vorangehenden Ansprüche, wobei die Mikropartikel (2) MCrAlX-Partikel oder Komponenten davon sind.

5. Verwendung nach einem der vorangehenden Ansprüche, wobei die Kopplungsmoleküle (5) Polymere sind.

6. Verwendung nach einem der vorangehenden Ansprüche, wobei die Kopplungsmoleküle (5) polare Moleküle sind.

7. Verwendung nach Anspruch 5 und Anspruch 6, wobei
- die Kopplungsmoleküle (5) Dendrimere mit einem unverzweigten Ende und einem verzweigten Ende sind,
- eine erste, an die Mikropartikel angepasste funktionelle Gruppe (6) sowie eine zweite, an die Nanopartikel angepasste funktionelle Gruppe (7) vorliegt und
- die erste funktionelle Gruppe (6) am unverzweigten Ende angeordnet ist und die zweite funktionelle Gruppe (7) am verzweigten Ende eines Dendrimers angeordnet ist.

## Claims

1. Use of a powder which comprises microparticles (2) having a particle size of more than 5 µm, nanoparticles (12) having a particle size of less than 1 µm and coupling molecules (5) and in which nanoparticles (12) are bonded to a microparticle (2) by means of at least one coupling molecule (5), for cold spraying processes.

2. Use according to Claim 1, wherein the microparticles (2) are each surrounded by a shell, which is formed by a number of nanoparticles (12) coupled to the microparticle (2) by means of coupling molecules (5).

3. Use according to Claim 1 or 2, wherein the microparticles (2) are ceramic particles.

4. Use according to one of the preceding claims, wherein the microparticles (2) are MCrAlX particles or components thereof.

5. Use according to one of the preceding claims, wherein the coupling molecules (5) are polymers.

6. Use according to one of the preceding claims, wherein the coupling molecules (5) are polar molecules.

7. Use according to Claim 5 and Claim 6, wherein
- the coupling molecules (5) are dendrimers with one unbranched end and one branched end,
- a first functional group (6) matched to the microparticles and a second functional group (7) matched to the nanoparticles are present, and
- the first functional group (6) is arranged at the unbranched end and the second functional group (7) is arranged at the branched end of a dendrimer.

## Revendications

1. Utilisation d'une poudre, qui comprend des microparticules (2), ayant une dimension de particule de plus de 5 µm, des nanoparticules (12), ayant une dimension de particule de moins de 1 µm et des molécules (5) de couplage, et dans laquelle des nanoparticules (12) sont liées à une microparticule (2), par au moins une molécule (5) de couplage, pour un procédé de projection par gaz froid.

2. Utilisation suivant la revendication 1, dans laquelle les microparticules (2) sont enrobées chacune d'un enrobage formé d'un certain nombre de nanoparticules (12) couplées à la microparticule (2) par des molécules (5) de couplage.

3. Utilisation suivant la revendication 1 ou 2, dans laquelle les microparticules (2) sont des particules de céramique.

4. Utilisation suivant l'une des revendications précédentes, dans laquelle les microparticules (2) sont des particules de MCrAlX ou des constituants de celles-ci.

5. Utilisation suivant l'une des revendications précédentes, dans laquelle les molécules (5) de couplage sont des polymères.

6. Utilisation suivant l'une des revendications précédentes, dans laquelle les molécules (5) de couplage sont des molécules polaires.

7. Utilisation suivant la revendication 5 et la revendication 6, dans laquelle
- les molécules (5) de couplage sont des dendrimères ayant une extrémité non ramifiée et une extrémité ramifiée,
- il y a un premier groupe (6) fonctionnel adapté aux microparticules ainsi qu'un deuxième groupe (7) fonctionnel adapté aux nanoparticules et
- le premier groupe (6) fonctionnel est disposé à l'extrémité non ramifiée et le deuxième groupe (7) fonctionnel à l'extrémité ramifiée d'un dendrimère.
